(19)

Europäisches
Patentamt
European
Patent Office
Office européen
des brevets

(11) **EP 4 528 600 B1**

(12) **EUROPEAN PATENT SPECIFICATION**

(45) Date of publication and mention
of the grant of the patent:
**22.07.2026  Bulletin 2026/30**

(21) Application number: **24193558.4**

(22) Date of filing: **08.08.2024**

(51) International Patent Classification (IPC):
*G06N 7/01* *(2023.01)*          *G06N 10/60* *(2022.01)*
*G06N 5/01* *(2023.01)*

(52) Cooperative Patent Classification (CPC):
**G06N 7/01; G06N 10/60;** G06N 5/01

(54) **DATA PROCESSING SYSTEM, PROGRAM, AND DATA PROCESSING METHOD**

DATENVERARBEITUNGSSYSTEM, PROGRAMM UND DATENVERARBEITUNGSVERFAHREN

SYSTÈME DE TRAITEMENT DE DONNÉES, PROGRAMME ET PROCÉDÉ DE TRAITEMENT DE
DONNÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.08.2023  JP 2023136888**

(43) Date of publication of application:
**26.03.2025   Bulletin 2025/13**

(73) Proprietor: **Fujitsu Limited
Kawasaki-shi, Kanagawa 211-8588 (JP)**

(72) Inventor: **Hara, Nobuyuki
Kawasaki-shi, Kanagawa 211-8588 (JP)**

(74) Representative: **Hoffmann Eitle
Patent- und Rechtsanwälte PartmbB
Arabellastraße 30
81925 München (DE)**

(56) References cited:
• **KALEHBASTI POUYA REZAZADEH ET AL:
"Advances in Intelligent Data Analysis XIX : 19th
International Symposium on Intelligent Data
Analysis, IDA 2021, Porto, Portugal, April 26-28,
2021, Proceedings", vol. 12695, 6 December 2020
(2020-12-06), pages 350 - 361, XP093238438,
ISSN: 0302-9743, ISBN: 978-3-030-74251-5,
Retrieved from the Internet <URL:https://arxiv.
org/pdf/2012.11391> DOI: 10.1007/
978-3-030-74251-5_28**
• **MATSUMOTO NASA ET AL: "Distance-based
clustering using QUBO formulations", vol. 12,
no. 1, 17 February 2022 (2022-02-17),
XP093097100, Retrieved from the Internet
<URL:https://www.nature.com/articles/
s41598-022-06559-z> [retrieved on 20250110],
DOI: 10.1038/s41598-022-06559-z**

EP 4 528 600 B1

**Description**

FIELD

The embodiments discussed herein are related to a data processing system, a program, and a data processing method.

BACKGROUND

There is an Ising machine (also called a Boltzmann machine) that uses an Ising-type evaluation function (also called an energy function, etc.) as a device that calculates a large-scale discrete optimization problem that a Neumann computer is not good at. In calculation with the Ising machine, a problem to be calculated is replaced with an Ising model, which is a model representing spin behavior of a magnetic material. Then, a state of the Ising model in which a value of the Ising-type evaluation function (corresponding to energy of the Ising model) becomes a local minimum is searched for by the Markov chain Monte Carlo method. The state in which the minimum value of local minimum values of the evaluation function is reached is treated as an optimal solution.

Meanwhile, there is divisive hierarchical clustering as one of data analysis methods for visualizing correlation between pieces of data. The divisive hierarchical clustering is a technique of sequentially dividing a cluster from a state in which all nodes each representing data form one cluster based on a weight value (e.g., similarity) between nodes.

Note that it has been proposed to use hierarchical clustering in compression of data to be written in block storage at a time of determining a block to be subject to batch compression. In addition, there has been proposed a method using a quantum annealing machine, which is a type of the Ising machine, to minimize an error in each layer at a time of updating parameters of a neural network by backpropagation.

Citation List

Patent Literature

[PTL 1] Japanese Laid-open Patent Publication No. 2019-46023 and International Publication Pamphlet No. WO 2020-255634

Document Kalehbasti Pouya Rezazadeh at al: "Ising-Based Louvain Method: Clustering Large Graphs with Specialized Hardware, 6 December 2020, relates to clustering algorithm based on the Louvain clustering algorithm for large-scale graphs using quadratic unconstrained binary optimization (QUBO).

SUMMARY OF INVENTION

TECHNICAL PROBLEM

In order to shorten the execution time of the divisive hierarchical clustering, it is possible to cause the Ising machine to calculate, for each division pattern of the number of nodes of each cluster, which of the two clusters after the division each node is to be classified into. However, the number of division patterns increases as the number of nodes increases.

Accordingly, the number of times of solving in the Ising machine increases, whereby the execution time of the hierarchical clustering becomes longer.

In one aspect, an object of the embodiments is to shorten an execution time of hierarchical clustering.

SOLUTION TO PROBLEM

The invention is set forth in the independent claims and further embodiments are defined in the dependent claims.

EFFECTS OF INVENTION

In one aspect, the embodiments may shorten an execution time of hierarchical clustering.

BRIEF DESCRIPTION OF DRAWINGS

FIG. 1 is a diagram illustrating an exemplary data processing system according to a first embodiment;

FIG. 2 is a block diagram illustrating exemplary hardware of an information processing device in a data processing system according to a second embodiment;

FIG. 3 is a block diagram illustrating exemplary functions of the information processing device;

FIG. 4 is a flowchart illustrating an exemplary flow of a data processing method;

FIG. 5 is a diagram illustrating an example of division candidate information of a first cluster;

FIG. 6 is a diagram illustrating an example of extracted data of division candidate information related to nodes of a second cluster;

FIG. 7 is a diagram illustrating an example of division candidate information of the second cluster generated from the extracted data of the division candidate information related to the nodes of the second cluster;

FIG. 8 is a diagram illustrating an example of extracted data of division candidate information related to nodes of a third cluster;

FIG. 9 is a diagram illustrating an example of division candidate information (storage target) of the third cluster generated from the extracted data of the division candidate information related to the nodes of the third cluster;

FIG. 10 is a diagram illustrating an example of the division candidate information of the third cluster;

FIG. 11 is a diagram illustrating an example of extracted data of division candidate information related to nodes of a fifth cluster;

FIG. 12 is a diagram illustrating an example of division candidate information (storage target) of the fifth cluster generated from the extracted data of the division candidate information related to the nodes of the fifth cluster;

FIG. 13 is a diagram illustrating an example of the division candidate information of the fifth cluster; and

FIG. 14 is a diagram illustrating an exemplary phylogenetic tree based on an execution result of hierarchical clustering for the first cluster illustrated in FIG. 5.

DESCRIPTION OF EMBODIMENTS

Hereinafter, modes for carrying out the embodiments will be described with reference to the drawings.

(First Embodiment)

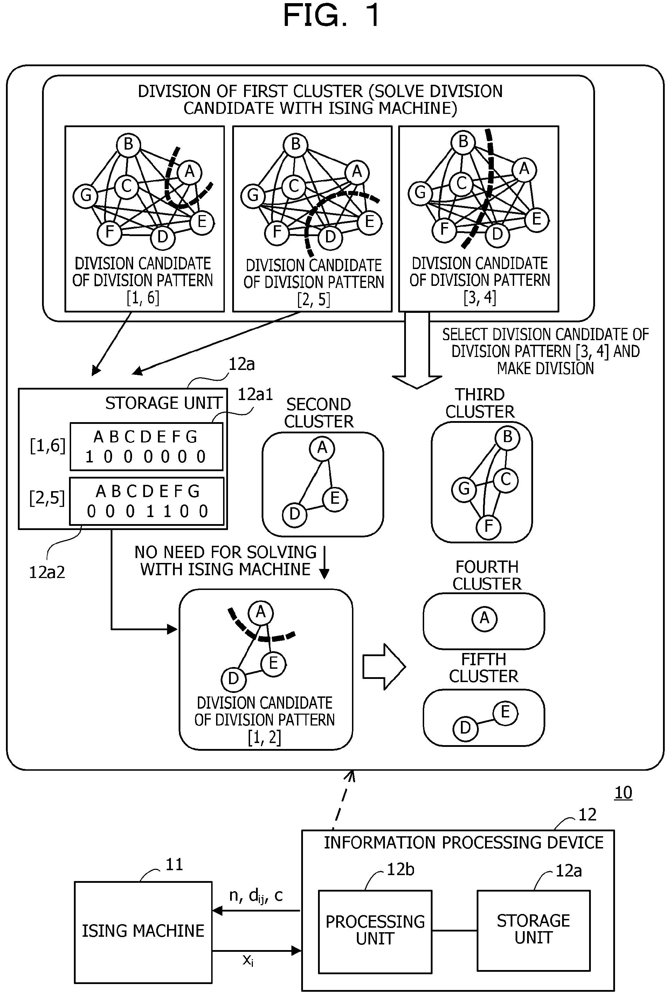

FIG. 1 is a diagram illustrating an exemplary data processing system according to a first embodiment.

A data processing system 10 executes divisive hierarchical clustering. The data processing system 10 includes an Ising machine 11 and an information processing device 12. The Ising machine 11 and the information processing device 12 may be coupled via a network, or may be coupled via an interface.

The Ising machine 11 may be implemented by, for example, a processor that is hardware such as a central processing unit (CPU), a graphics processing unit (GPU), a digital signal processor (DSP), or the like. Furthermore, the Ising machine 11 may be implemented by an electronic circuit such as an application specific integrated circuit (ASIC), a field programmable gate array (FPGA), or the like. Furthermore, the Ising machine 11 may be a quantum annealing machine.

The Ising machine 11 calculates division candidates at a time of dividing a cluster including a plurality of nodes into two clusters based on an Ising-type evaluation function. The Ising-type evaluation function in the hierarchical clustering may be expressed by, for example, the following equation (1).

[Equation 1]

$$E = \sum_{i=0}^{n-1} \sum_{j>i}^{n-1} d_{ij}(x_i - x_j)^2 + \alpha \left( \sum_{i=0}^{n-1} x_i - c \right)^2 \tag{1}$$

On the right side of the equation (1), the first term is an objective function, and the second term is a constraint term. In the equation (1), n represents the number of nodes included in the cluster to be divided. Node numbers are represented by i and j.

In the objective function, $x_i$ and $x_j$ represent binary variables having a value of "0" or "1". The values "0" and "1" function as labels indicating two clusters after division. For example, a node with the node number = i belongs to a cluster labeled "0" (hereinafter referred to as a cluster "0") in a case of $x_i = 0$, and in a case of $x_i = 1$, it is indicated that the node belongs to a cluster labeled "1" (hereinafter referred to as a cluster "1"). A weight value (e.g., similarity) between the node with the node number = i and the node with the node number = j is represented by $d_{ij}$. This $d_{ij}$ has a value of equal to or greater than 0. For example, a greater value of $d_{ij}$ indicates a higher degree of similarity. It is when $x_i$ and $x_j$ are 0 and 1 or vice versa (i.e., in a case of being allocated to different clusters) that $d_{ij}$ is added to the value of the evaluation function.

In the constraint term, a represents a positive integer. A value of a is set such that the value of the evaluation function becomes a greater value when a constraint condition to be described later is not satisfied.

An expected value of the number of nodes belonging to the cluster "1" is represented by c. The expected value of the number of nodes belonging to the cluster "1" is a natural number between 1 and n/2. Furthermore, c is determined by a division pattern selected by the information processing device 12. For example, in a case of n = 8, there are four division patterns of the number of nodes [number of nodes in the cluster "1", number of nodes in the cluster "0"] = [1, 7], [2, 6], [3, 5], [4, 4]. When the information processing device 12 specifies the division pattern [1, 7], c = 1. When the information processing device 12 specifies the division pattern [2, 6], c = 2.

In the constraint term, when the sum of $x_i$ of i = 0 to n - 1 is not c, that is, when constraint violation occurs, the constraint term has a greater value. Since the Ising machine 11 searches for a combination of n values of $x_i$ with which the value of the evaluation function becomes a local minimum, it is unlikely that a combination in which such constraint violation occurs is selected. That is, the number of nodes belonging to the cluster "0" and the number of nodes belonging to the cluster "1" may be indirectly controlled by this constraint term, and the node division candidates for the division pattern specified by the information processing device 12 may be calculated.

The Ising machine 11 searches for a state (represented by a combination of n values of $x_i$) of an Ising model in which the value of the evaluation function becomes a local minimum as described above by, for example, the Markov chain Monte Carlo method. The state in which the minimum value of local minimum values of the evaluation function is reached is treated as an optimal solution. Note that a processing unit 12b may also search for a state in which a value of H(x) becomes a local maximum (in this case, the state in which the maximum value is reached is treated as an optimal solution) by changing signs of individual terms on the right side of the equation (1).

The Ising machine 11 determines whether or not to permit a change in the value of the evaluation function when the value of $x_i$ is changed based on a result of comparison between a change amount of the value of the evaluation function and a threshold, and repeats processing of updating the value when the change is permitted. Examples of the threshold include a noise value obtained based on a random number and a value of a temperature parameter. For example, log(rand) × T, which is an exemplary noise value obtained based on a uniform random number (rand) of equal to or greater than 0 and equal to or smaller than 1 and a temperature parameter (T), may be used as the threshold. By stochastically accepting a change in which the value of the evaluation function increases using such a threshold, it becomes possible to suppress a solution from being constrained to a local solution.

The Ising machine 11 may perform a simulated annealing method or a replica exchange method (also called an exchange Monte Carlo method, etc.), which is a type of the Markov chain Monte Carlo method. In a case of performing the simulated annealing method, for example, the Ising machine 11 decreases the value of the temperature parameter (T) described above according to a predetermined temperature parameter change schedule each time the determination as to whether or not to permit a change in the value of $x_i$ is repeated a predetermined number of times. Then, the Ising machine 11 outputs, as division candidate information representing the calculated division candidate, the combination of n values of $x_i$ obtained when the determination described above is repeated a predetermined number of times for termination. Furthermore, the Ising machine 11 may output the value of the evaluation function obtained by the combination of the values of $x_i$.

In a case of performing the replica exchange method, the Ising machine 11 repeats the determination processing as to whether or not to permit a change in $x_i$ as described above, or the like in each of a plurality of replicas in which values of T different from each other are set. Then, the Ising machine 11 carries out replica exchange each time the determination processing or the like is repeated a predetermined number of times. For example, the Ising machine 11 selects two replicas having adjacent values of T, and exchanges n values of $x_i$ between the selected two replicas at a predetermined exchange probability based on a difference in values of the evaluation function or a difference in values of T between the replicas. Note that the values of T may be exchanged between the two replicas instead of exchanging the n values of $x_i$. The Ising machine 11 stores the n values of $x_i$ and the value of the evaluation function when the minimum value of the evaluation function is obtained in each replica. Then, the Ising machine 11 outputs, as division candidate information, the combination of the n values of $x_i$ corresponding to the minimum value of the evaluation function in all the replicas among the values of the evaluation function stored after the determination processing described above is repeated the predetermined number of times for termination in each replica. Furthermore, the Ising machine 11 may output the value of the evaluation function obtained by the combination of the values of $x_i$.

The information processing device 12 may be a client device, or may be a server device. The information processing device 12 is a computer.

The information processing device 12 includes a storage unit 12a and the processing unit 12b. The storage unit 12a may be a volatile semiconductor memory such as a random access memory (RAM) or the like, or may be nonvolatile storage such as a hard disk drive (HDD), a flash memory, or the like. Examples of the processing unit 12b include a processor such as a CPU, a GPU, a DSP, or the like. However, the processing unit 12b may include an electronic circuit such as an ASIC, an FPGA, or the like. For example, the processor executes a program stored in a memory (which may be the storage unit 12a) such as a RAM. A set of processors may be called a multiprocessor or simply "processors".

The storage unit 12a stores information regarding division candidates that have not been selected in processing of the processing unit 12b to be described later. Note that the storage unit 12a may store information regarding a selected division candidate. Furthermore, the storage unit 12a may store a weight value ($d_{ij}$) among all nodes.

The processing unit 12b obtains, from the Ising machine 11, division candidate information indicating a division candidate for each of a plurality of division patterns determined by the number of nodes included in a cluster to be divided. Note that, when the Ising machine 11 outputs the value of the evaluation function of the division candidate, the processing unit 12b may obtain the value.

FIG. 1 illustrates an example of first dividing a first cluster including seven nodes A to G. The processing unit 12b sets n = 7, c = 1, 2, and 3, and $d_{ij}$ among nodes A to G in the Ising machine 11. The processing unit 12b may set initial values of n $x_i$, a in the equation (1), and other calculation conditions in the Ising machine 11.

As a result, the Ising machine 11 calculates each of division candidates of three division patterns [1, 6], [2, 5], and [3, 4]. In the example of FIG. 1, an exemplary case is illustrated where the division candidate for dividing the node A and the nodes B to G is calculated as a division candidate for the division pattern [1, 6]. Furthermore, an exemplary case is illustrated where the division candidate for dividing the nodes A to C, G, and F and the nodes D and E is calculated as a division candidate for the division pattern [2, 5]. Furthermore, an exemplary case is illustrated where the division candidate for dividing the nodes A, D, and E and the nodes B, C, F, and G is calculated as a division candidate for the division pattern [3, 4].

The processing unit 12b selects one of the division candidates for the plurality of respective division patterns described above based on the values of the evaluation function of the division candidates described above, and makes a division into two clusters. The processing unit 12b may calculate the values of the evaluation function by calculating the equation (1) based on the obtained division candidate information.

For example, the processing unit 12b may select the division candidate having the smallest value of the evaluation function to make a division. However, in that case, there is a tendency that a frequency of occurrence of division in which only the node having the smallest weight value with respect to other nodes is separated increases. In order to suppress such a tendency, the processing unit 12b may select a division candidate using a value of an evaluation function normalized based on the following equation (2).

[Equation 2]

$$E_{norm} = \frac{E}{assoc(Cluster\ P)} + \frac{E}{assoc(Cluster\ Q)} \qquad (2)$$

In the equation (2), a normalized evaluation function ($E_{norm}$) when a certain cluster is divided into two clusters (Cluster P and Cluster Q) is expressed. A sum of a total sum of weight values between nodes classified as the Cluster P and a total sum of weight values between the nodes classified as the Cluster P and nodes classified as the Cluster Q is represented by assoc(Cluster P). Likewise, assoc(Cluster Q) represents a sum of a total sum of weight values between nodes classified as the Cluster Q and a total sum of weight values between the nodes classified as the Cluster P and the nodes classified as the Cluster Q.

The assoc(Cluster P) and the assoc(Cluster Q) may be defined as the following equations (3) and (4).

[Equation 3]

$$assoc(Cluster\ P) = \sum_{s=0}\sum_{t>s} d_{p_s p_t} + \sum_{s=0}\sum_{\substack{q_t>p_s \\ t=0}} d_{p_s q_t} \qquad (3)$$

[Equation 4]

$$assoc(Cluster\ Q) = \sum_{s=0}\sum_{t>s} d_{q_s q_t} + \sum_{s=0}\sum_{\substack{q_t>p_s \\ t=0}} d_{p_s q_t} \qquad (4)$$

An s-th (s ≥ 0) node among the nodes classified as the Cluster P is represented by $p_s$. A t-th (t ≥ 0) node among the nodes classified as the Cluster Q is represented by qt. Comparison of magnitude of node numbers is represented by qt > $p_s$. For example, since $t_4 > t_1$ holds in the case of qt = $t_4$ and $p_s = t_1$, qt > $p_s$ holds true.

A weight value between the node $p_s$ classified as the Cluster P and the node qt classified as the Cluster Q is represented by $d_{psqt}$ ("s" is a subscript for p).

As a specific example, assoc(Cluster P) and assoc(Cluster Q) of division candidate information 12a2 to be described later stored in the storage unit 12a in FIG. 1 will be considered. While the node numbers are represented by A to G in FIG. 1, the node numbers will be represented by $t_1$ to $t_7$ here. That is, it is assumed that a cluster classification result of the node numbers $t_1$ to $t_7$ of the division candidate information 12a2 is 0, 0, 0, 1, 1, 0, 0.

The Cluster P is assumed to be the cluster "0", and the Cluster Q is assumed to be the cluster "1". Moreover, a set of nodes belonging to the Cluster P will be expressed as $\{t_1, t_2, t_3, t_6, t_7\} = \{p_0, p_1, p_2, p_3, p_4\}$. Likewise, a set of nodes belonging to the Cluster Q will be expressed as $\{t_4, t_5\} = \{q_0, q_1\}$. At this time, assoc(Cluster P) and assoc(Cluster Q) may be expressed by equations (5) and (6) using a weight value between nodes.

[Equation 5]

$$assoc(Cluster\ P) = \sum_{s=0}\sum_{t>s} d_{p_s p_t} + \sum_{s=0}\sum_{\substack{q_t>p_s \\ t=0}} d_{p_s q_t} \tag{5}$$

$$= \{d_{p_0 p_1} + d_{p_0 p_2} + d_{p_0 p_3} + d_{p_0 p_4} + d_{p_1 p_2} + d_{p_1 p_3} + d_{p_1 p_4} + d_{p_2 p_3}$$
$$+ d_{p_2 p_4} + d_{p_3 p_4}\}\cdots + \{d_{p_0 q_0} + d_{p_0 q_1} + d_{p_1 q_0} + d_{p_1 q_1} + d_{p_2 q_0} + d_{p_2 q_1}\}$$
$$= \{d_{t_1 t_2} + d_{t_1 t_3} + d_{t_1 t_6} + d_{t_1 t_7} + d_{t_2 t_3} + d_{t_2 t_6} + d_{t_2 t_7} + d_{t_3 t_6}$$
$$+ d_{t_3 t_7} + d_{t_6 t_7}\}\cdots + \{d_{t_1 t_4} + d_{t_1 t_5} + d_{t_2 t_4} + d_{t_2 t_5} + d_{t_3 t_4} + d_{t_3 t_5}\}$$

[Equation 6]

$$assoc(Cluster\ Q) = \sum_{s=0}\sum_{t>s} d_{q_s q_t} + \sum_{s=0}\sum_{\substack{q_t>p_s \\ t=0}} d_{p_s q_t} \tag{6}$$

$$= \{d_{q_0 q_1}\}\cdots + \{d_{p_0 q_0} + d_{p_0 q_1} + d_{p_1 q_0} + d_{p_1 q_1} + d_{p_2 q_0} + d_{p_2 q_1}\}$$
$$= \{d_{t_4 t_5}\}\cdots + \{d_{t_1 t_4} + d_{t_1 t_5} + d_{t_2 t_4} + d_{t_2 t_5} + d_{t_3 t_4} + d_{t_3 t_5}\}$$

The processing unit 12b selects the division candidate having the smallest $E_{norm}$ to make a division.

The processing unit 12b stores the division candidate information of unselected division candidates in the storage unit 12a.

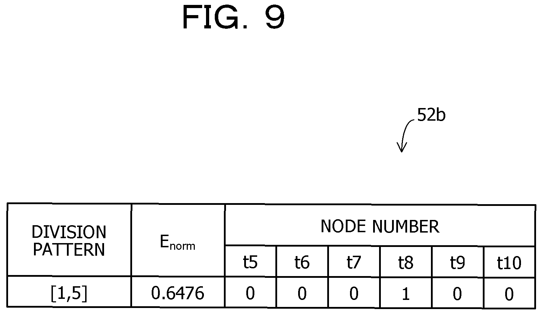

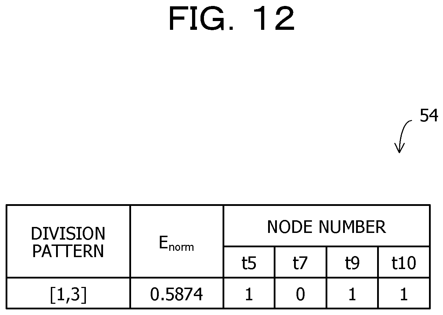

In the example of FIG. 1, the division candidate of the division pattern [3, 4] is selected, and the first cluster is divided into a second cluster including the nodes A, D, and E and a third cluster including the nodes B, C, F, and G. In this case, pieces of division candidate information 12a1 and 12a2 of the unselected division pattern [1, 6] and division pattern [2, 5] are stored in the storage unit 12a. In the pieces of division candidate information 12a1 and 12a2, "0" and "1" are values of $x_i$ in the equation (1), and indicate whether each of the nodes A to G is classified into the above-described cluster "0" or cluster "1". Note that the pieces of division candidate information 12a1 and 12a2 may be stored in a state of being separated into nodes included in the second cluster and nodes included in the third cluster for easy reference in subsequent processing (see FIGs. 9, 12, etc. to be described later). Furthermore, the pieces of division candidate information 12a1 and 12a2 may include a value of the evaluation function (E) of the equation (1) and a value of $E_{norm}$.

Thereafter, the processing unit 12b carries out cluster division of the next hierarchy. It is assumed that the second cluster and the third cluster are obtained as in FIG. 1 in the cluster division in the previous hierarchy. The processing unit 12b determines whether or not there is an unselected division candidate corresponding to the division pattern of the second cluster based on the pieces of division candidate information 12a1 and 12a2 stored in the storage unit 12a.

Since the number of nodes of the second cluster is three in the example of FIG. 1, there is a division pattern of [1, 2]. The second cluster includes the nodes A, D, and E. Referring to the division candidate information 12a1, the node A is classified into the cluster "1" and the nodes D and E are classified into the cluster "0", which indicate a division candidate for making a division such that the node A is included in a cluster different from that of the nodes D and E. Likewise, the division candidate information 12a2 indicates a division candidate for making a division such that the node A is included in a cluster different from that of the nodes D and E. In such a case, the processing unit 12b determines that there is an unselected division candidate corresponding to the division pattern [1, 2] of the second cluster.

When it is determined that there is an unselected division candidate corresponding to the division pattern of the second cluster, the processing unit 12b selects one of the division candidates of the second cluster including the unselected division candidate corresponding to the division pattern. Then, the processing unit 12b divides the second cluster into a fourth cluster and a fifth cluster based on the selected division candidate.

Since the division pattern of the second cluster is only one of [1, 2] in the example of FIG. 1, the processing unit 12b selects the division candidate for making a division into the node A and the nodes D and E, which is the unselected division candidate. Then, the processing unit 12b divides the second cluster into the fourth cluster including the node A and the fifth cluster including the nodes D and E.

As a background of this determination, there is a possibility that the division candidate information of the division candidate that has not been selected at the time of cluster division of a certain hierarchy includes information regarding a plurality of nodes to be divided in the cluster division in the next hierarchy since the weight value between the nodes is small. When such division candidate information is also used in the cluster division of the next hierarchy, the number of division candidates to be calculated by the Ising machine 11 may be reduced. That is, the number of times of solving by the Ising machine 11 may be reduced.

Note that, when there is no unselected division candidate corresponding to the division pattern of the second cluster, a division candidate corresponding to the division pattern is calculated by the Ising machine 11 by the processing described above. Furthermore, when there is a plurality of division patterns of the second cluster, a division candidate for a division pattern other than the division pattern corresponding to the unselected division candidate is calculated by the Ising machine 11 by the processing described above. Also in those cases, for example, a division candidate is selected based on $E_{norm}$, and the division candidate information of the unselected division candidate is stored in the storage unit 12a.

The third cluster is also processed in a similar manner to the second cluster. Referring to the division candidate information 12a1 in the example of FIG. 1, the nodes B, C, G, and F are classified into the same cluster "0" and are also classified into the same cluster "0" in the division candidate information 12a2, which indicates that there is no unselected division candidate corresponding to each division pattern of the third cluster, whereby a division candidate for each division pattern of the third cluster is calculated by the Ising machine 11. Then, the processing unit 12b performs processing similar to the processing performed on the first cluster.

The processing unit 12b performs the processing described above until there is no cluster with the number of nodes equal to or more than three. This is because a cluster with the number of nodes of two may be divided without calculating a division candidate. When there is no cluster with the number of nodes equal to or more than three, the process of the hierarchical clustering is terminated.

As described above, the data processing system 10 according to the first embodiment includes the Ising machine 11 and the information processing device 12. The Ising machine 11 calculates a division candidate at the time of dividing the first cluster including a plurality of nodes into the second cluster and the third cluster based on the Ising-type evaluation function including a weight value among the plurality of nodes. The information processing device 12 obtains, from the Ising machine 11, the division candidate information indicating division candidates for a plurality of individual division patterns determined by the number of nodes included in the first cluster. Then, the information processing device 12 selects one of the division candidates for the plurality of individual division patterns based on the values of the evaluation function of the division candidates, and divides the first cluster into the second cluster and the third cluster. Furthermore, the information processing device 12 stores the pieces of division candidate information 12a1 and 12a2 of the unselected division candidates in the storage unit 12a. Then, the information processing device 12 determines whether or not there is an unselected division candidate corresponding to the division pattern of the second cluster based on the pieces of division candidate information 12a1 and 12a2. When it is determined that there is an unselected division candidate corresponding to the division pattern of the second cluster, the information processing device 12 selects one of the division candidates of the second cluster including the unselected division candidate corresponding to the division pattern. Then, the information processing device 12 divides the second cluster into the fourth cluster and the fifth cluster based on the selected division candidate.

As a result, the number of times of solving by the Ising machine 11 may be reduced, and the execution time of the hierarchical clustering may be shortened. In the case of the example of FIG. 1, the division pattern of the nodes A, D, E included in the second cluster is obtained by referring to the classification result of the nodes A, D, and E in the pieces of division candidate information 12a1 and 12a2, whereby the Ising machine 11 does not need to solve the division candidate of the division pattern [1, 2] of the second cluster. In one solution process for solving the division candidate in the Ising machine 11, the determination processing described above is repeated until the predetermined number of times for termination is reached. While this number of times of repetition also affects the execution time of the hierarchical clustering, it is difficult to estimate an appropriate number of times in advance. Thus, the data processing system 10 reduces the number of times of solving itself in the Ising machine 11, thereby achieving reduction of the execution time of the hierarchical clustering.

(Second Embodiment)

Next, a second embodiment will be described.

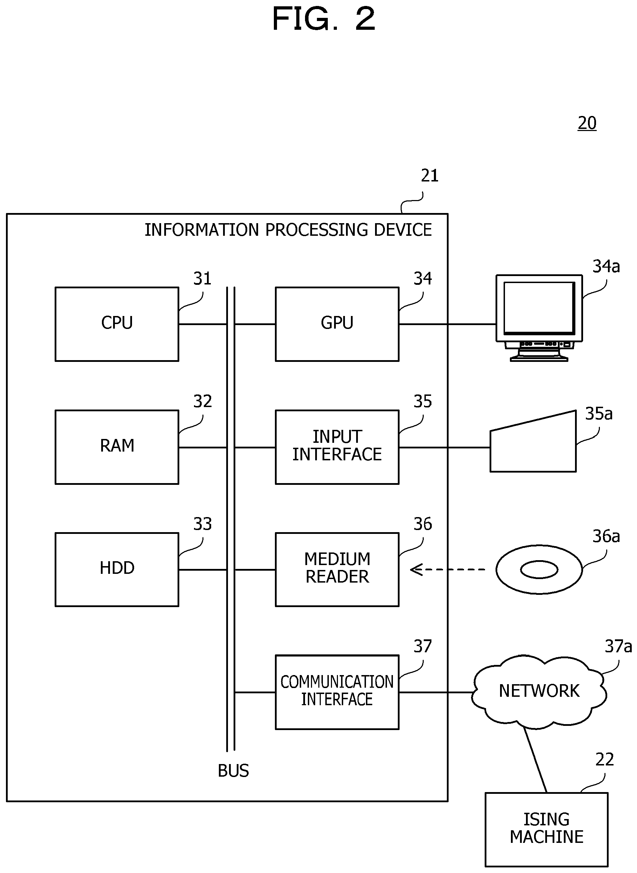

FIG. 2 is a block diagram illustrating exemplary hardware of an information processing device in a data processing system according to the second embodiment. An information processing device 21 in a data processing system 20 may be a client device, or may be a server device. The information processing device 21 is a computer.

The information processing device 21 includes a CPU 31, a RAM 32, an HDD 33, a GPU 34, an input interface 35, a medium reader 36, and a communication interface 37 that are coupled to a bus. The CPU 31 corresponds to the processing unit 12b in the first embodiment. The RAM 32 or the HDD 33 corresponds to the storage unit 12a in the first embodiment.

The CPU 31 is a processor that executes a program command. The CPU 31 loads a program stored in the HDD 33 into the RAM 32 to execute the program. The information processing device 21 may include a plurality of processors.

The RAM 32 is a volatile semiconductor memory that temporarily stores a program to be executed by the CPU 31 and data to be used by the CPU 31 for arithmetic operations. The information processing device 21 may include a volatile memory of a type other than the RAM.

The HDD 33 is nonvolatile storage that stores data and programs of software such as an operating system (OS), middleware, application software, and the like. The information processing device 21 may include another type of nonvolatile storage such as a flash memory, a solid state drive (SSD), or the like.

The GPU 34 performs image processing in cooperation with the CPU 31, and outputs an image to a display device 34a coupled to the information processing device 21. The display device 34a is, for example, a cathode ray tube (CRT) display, a liquid crystal display, an organic electroluminescence (EL) display, or a projector. Another type of output device such as a printer may be coupled to the information processing device 21.

Furthermore, the GPU 34 may be used as a general-purpose computing on graphics processing unit (GPGPU). The GPU 34 may execute a program in response to an instruction from the CPU 31. The information processing device 21 may include a volatile semiconductor memory other than the RAM 32 as a GPU memory.

The input interface 35 receives input signals from an input device 35a coupled to the information processing device 21. The input device 35a is, for example, a mouse, a touch panel, or a keyboard. A plurality of input devices may be coupled to the information processing device 21.

The medium reader 36 is a reading device that reads programs and data recorded on a recording medium 36a. The recording medium 36a is, for example, a magnetic disk, an optical disk, or a semiconductor memory. Examples of the magnetic disk include a flexible disk (FD) and an HDD. Examples of the optical disk include a compact disc (CD) and a digital versatile disc (DVD). The medium reader 36 copies the programs and data read from the recording medium 36a to another recording medium such as the RAM 32, the HDD 33, or the like. The read programs may be executed by the CPU 31.

The recording medium 36a may be a portable recording medium. The recording medium 36a may be used for distribution of programs and data. Furthermore, the recording medium 36a and the HDD 33 may be referred to as computer-readable recording media.

The communication interface 37 communicates with an Ising machine 22 and another information processing device via a network 37a. The communication interface 37 may be a wired communication interface to be coupled to a wired communication device such as a switch, a router, or the like, or may be a wireless communication interface to be coupled to a wireless communication device such as a base station, an access point, or the like.

The Ising machine 22 corresponds to the Ising machine 11 in the first embodiment. The Ising machine 22 may be implemented by, for example, a processor that is hardware such as a CPU, a GPU, a DSP, or the like. Furthermore, the Ising machine 22 may be implemented by an electronic circuit such as an ASIC, an FPGA, or the like. Note that the Ising machine 22 may be included in another information processing device coupled to the network 37a. Furthermore, the Ising machine 22 may be coupled to the bus of the information processing device 21 via an interface. Furthermore, the Ising machine 22 may be included in the information processing device 21.

Next, functions and processing procedures of the information processing device 21 will be described.

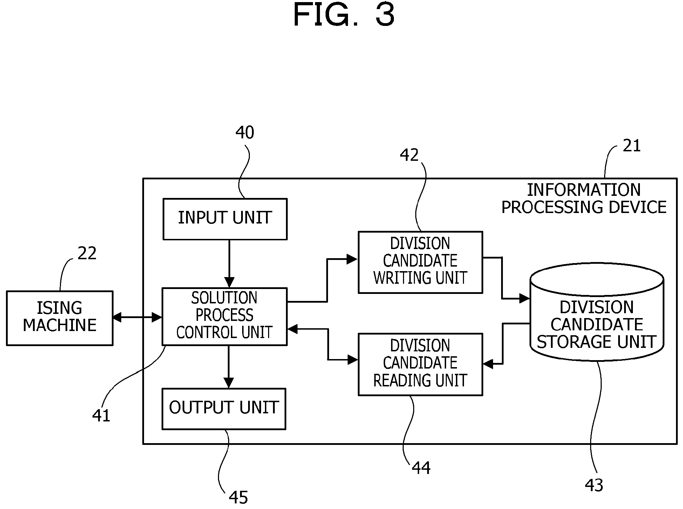

FIG. 3 is a block diagram illustrating exemplary functions of the information processing device.

The information processing device 21 includes an input unit 40, a solution process control unit 41, a division candidate writing unit 42, a division candidate storage unit 43, a division candidate reading unit 44, and an output unit 45. The division candidate storage unit 43 is equipped using, for example, the RAM 32 or the HDD 33. The input unit 40, the solution process control unit 41, the division candidate writing unit 42, the division candidate reading unit 44, and the output unit 45 are equipped using, for example, the CPU 31 and a program.

The input unit 40 receives, for example, input of information regarding a plurality of nodes to be subject to hierarchical clustering, calculation conditions, and the like. The information regarding the nodes includes, for example, the number of nodes n and the weight value $d_{ij}$ in the equation (1). The calculation conditions include, for example, the number of replicas, a replica exchange cycle, and a value of a temperature parameter set for each replica in a case of executing the replica exchange method, a temperature parameter change schedule in a case of executing the simulated annealing method, calculation termination conditions, and the like. The information regarding the nodes and the calculation conditions may be input by an operation of the input device 35a made by a user, or may be input via the recording medium 36a or the network 37a.

The solution process control unit 41 executes the hierarchical clustering while causing the Ising machine 22 to perform a division candidate solution process based on the input information regarding the nodes and calculation conditions. The solution process control unit 41 transmits, to the division candidate writing unit 42, division candidate information regarding division candidates (unselected division candidates) that have not been used for cluster division among the division candidates solved by the Ising machine 22. Furthermore, the solution process control unit 41 transmits, to the division candidate reading unit 44, a division pattern and the information regarding the nodes in the cluster to be divided. Then, when the division candidate reading unit 44 determines that there is a division candidate corresponding to the transmitted information regarding the nodes and division pattern, the solution process control unit 41 obtains the division candidate information regarding the division candidate. The solution process control unit 41 selects one of the division candidates indicated by the division candidate information transmitted from the division candidate reading unit 44 and other division candidates (if any) based on, for example, $E_{norm}$ of the equation (2). Then, the solution process control unit 41 carries out the cluster division based on the selected division candidate.

The division candidate writing unit 42 writes the division candidate information transmitted from the solution process control unit 41 into the division candidate storage unit 43.

The division candidate storage unit 43 stores the division candidate information.

The division candidate reading unit 44 reads the division candidate information stored in the division candidate storage unit 43. Then, the division candidate reading unit 44 determines whether or not there is a division candidate corresponding to the information regarding the nodes and the division pattern transmitted by the solution process control unit 41. When it is determined that there is a corresponding division candidate, the division candidate reading unit 44 transmits the division candidate information regarding the division candidate to the solution process control unit 41.

The output unit 45 outputs an execution result of the hierarchical clustering executed by the solution process control unit 41. The execution result of the hierarchical clustering may be output in a format such as a phylogenetic tree, for example. For example, the output unit 45 may output the execution result to the display device 34a for display, transmit the execution result to another information processing device via the network 37a, or store the execution result in an external storage device.

Hereinafter, an exemplary processing procedure (data processing method) in which the data processing system 20 carries out the hierarchical clustering will be described.

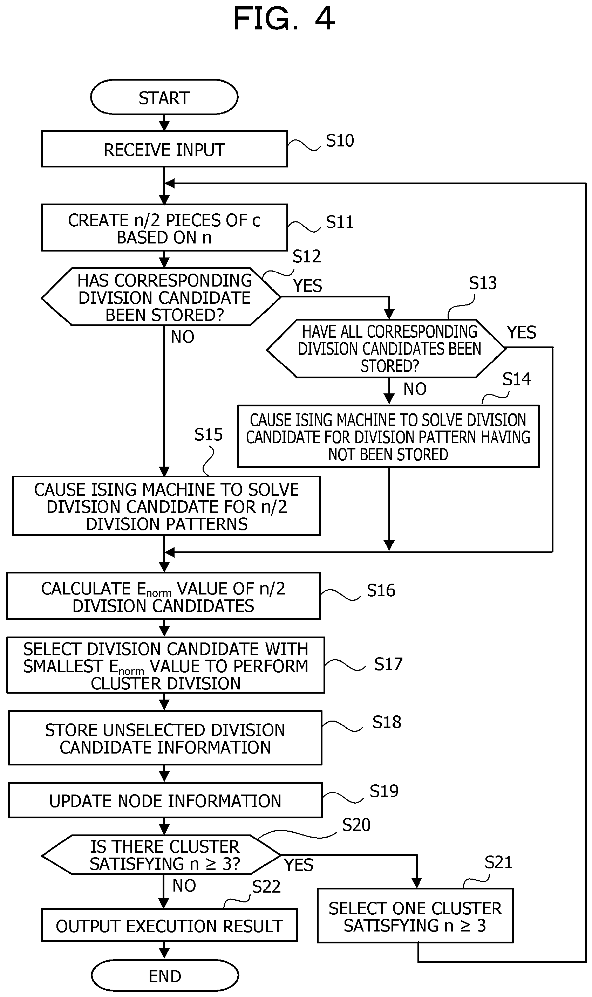

FIG. 4 is a flowchart illustrating an exemplary flow of the data processing method.

Step S10: The input unit 40 receives an input of the information regarding the nodes, the calculation conditions, and the like.

Step S11: The solution process control unit 41 creates n/2 pieces of c expressed in the equation (1) based on the number of nodes n in the cluster included in the information regarding the nodes. In a case of n = 10, there are five division patterns of the number of nodes [number of nodes in the cluster "1", number of nodes in the cluster "0"] = [1, 9], [2, 8], [3, 7], [4, 6], [5, 5]. In this case, the number of pieces of c is five of c = 1, 2, 3, 4, 5.

Step S12: The division candidate reading unit 44 determines whether or not a division candidate corresponding to the information regarding the nodes and the division pattern transmitted by the solution process control unit 41 has been stored in the division candidate storage unit 43. Processing of step S13 is performed if it is determined that the corresponding division candidate has been stored in the division candidate storage unit 43, and processing of step S15 is performed if it is determined to have not been stored.

Step S13: The division candidate reading unit 44 determines whether or not all the division candidates corresponding to the information regarding the nodes and the division pattern transmitted by the solution process control unit 41 have been stored in the division candidate storage unit 43. Processing of step S16 is performed if it is determined that all the corresponding division candidates have been stored in the division candidate storage unit 43, and processing of step S14 is performed if it is determined that some of the corresponding division candidates have not been stored.

Step S14: The solution process control unit 41 causes the Ising machine 22 to solve division candidates with respect to the division patterns that have not been stored. The solution process control unit 41 obtains division candidate information regarding the obtained division candidates. Thereafter, the processing of step S16 is performed.

Step S15: Since division candidates corresponding to n/2 division patterns have not been stored, the solution process control unit 41 causes the Ising machine 22 to solve the division candidates. The solution process control unit 41 obtains division candidate information regarding the obtained division candidates.

Step S16: The solution process control unit 41 calculates values of $E_{norm}$ of the n/2 division candidates based on the equation (2).

Step S17: The solution process control unit 41 selects the division candidate having the smallest value of $E_{norm}$ to carry out cluster division.

Step S18: The solution process control unit 41 transmits, to the division candidate writing unit 42, division candidate information regarding division candidates (unselected division candidates) that have not been used for the cluster division among the division candidates solved by the Ising machine 22. The division candidate writing unit 42 writes and stores the division candidate information transmitted from the solution process control unit 41 in the division candidate storage unit 43.

Step S19: The solution process control unit 41 updates the information regarding the nodes based on the result of the cluster division. For example, the information regarding the nodes in the cluster before the division (e.g., node number and the number of nodes n) is updated to information regarding nodes in two newly generated clusters based on the result of the cluster division.

Step S20: The solution process control unit 41 determines whether or not there is a cluster satisfying $n \geq 3$. If it is determined that there is a cluster satisfying $n \geq 3$, processing of step S21 is performed. If it is determined that there is no cluster satisfying $n \geq 3$, processing of step S22 is performed.

Step S21: The solution process control unit 41 selects one cluster satisfying $n \geq 3$. Thereafter, the process from step S11 is repeated for the selected cluster.

Step S22: The output unit 45 outputs an execution result. Accordingly, the process is terminated.

(Specific Example of Hierarchical Clustering)

Next, an example of dividing a first cluster with the number of nodes n = 10 will be described.

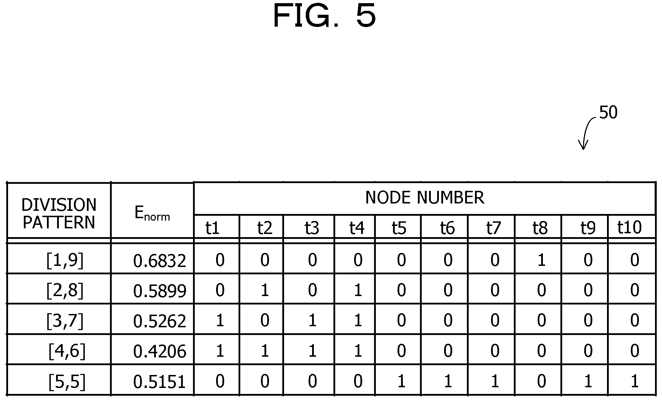

FIG. 5 is a diagram illustrating an example of division candidate information of the first cluster. In division candidate information 50 of the first cluster, node numbers are represented by t1 to t10. The references t1 to t10 correspond to i and j in the equation (1).

In a case of n = 10, there are five division patterns of the number of nodes in the first cluster [number of nodes in the cluster "1", number of nodes in the cluster "0"] = [1, 9], [2, 8], [3, 7], [4, 6], [5, 5]. Note that division patterns in which the number of nodes in the cluster "0" and the number of nodes in the cluster "1" are opposite each other are treated as the same division pattern. That is, for example, the division pattern [1, 9] and the division pattern [9, 1] are treated as the same division pattern [1, 9].

FIG. 5 illustrates exemplary division candidates solved by the Ising machine 22 with respect to the five division patterns described above based on the processing of step S15 described above. The division candidate solved for the division pattern [1, 9] is to divide the node of t8 from the other nodes. The division candidate solved for the division pattern [2, 8] is to divide the nodes of t2 and t4 from the other nodes. The division candidate solved for the division pattern [3, 7] is to divide the nodes of t1, t3, and t4 from the other nodes. The division candidate solved for the division pattern [4, 6] is to divide the nodes of t1 to t4 from the nodes of t5 to t10. The division candidate solved for the division pattern [5, 5] is to divide the nodes of t1 to t4 and t8 from the other nodes.

FIG. 5 illustrates example values of $E_{norm}$ calculated by the solution process control unit 41 in the processing of step S16. In the example of FIG. 5, the value of $E_{norm}$ of the division candidate of the division pattern [4, 6] is the minimum. Thus, in the processing of step S17, the division candidate of the division pattern [4, 6] is selected to carry out the cluster division into the nodes of t1 to t4 and the nodes of t5 to t10.

In this case, in the processing of step S18, the division candidate information regarding the division candidates of the division patterns [1, 9], [2, 8], [3, 7], and [5, 5], which are unselected division candidates, is stored in the division candidate storage unit 43.

However, the solution process control unit 41 may generate the division candidate information in a manner of being separated into two individual clusters after the division for easy reference in the processing of the next hierarchy (processing of step S12). Hereinafter, of the two clusters after the division, a cluster including the nodes of t1 to t4 will be referred to as a second cluster, and a cluster including the nodes of t5 to t10 will be referred to as a third cluster.

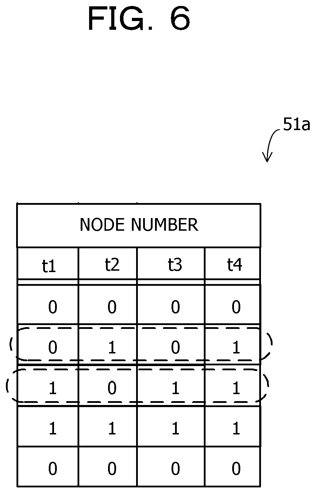

FIG. 6 is a diagram illustrating an example of extracted data of division candidate information related to the nodes of the second cluster.

Extracted data 51a of the division candidate information related to the nodes of the second cluster is obtained by extracting the division candidate information related to the nodes included in the second cluster from the division candidate information 50 illustrated in FIG. 5. The solution process control unit 41 generates division candidate information of the second cluster from the extracted data 51a.

As illustrated in FIG. 6, the division candidates of the division patterns in which all the nodes of t1 to t4 are classified into the cluster "0" or "1" are excluded from the division candidates of the second cluster. The division candidate information of such division candidates is not used as the division candidate information of the second cluster, and is not stored.

The division candidate of the division pattern in which the nodes of t1 and t3 are classified into the cluster "0" and the nodes of t2 and t4 are classified into the cluster "1" (corresponding to the second cluster) is determined as a division candidate of the division pattern [2, 2] of the second cluster.

The division candidate of the division pattern in which the nodes of t1, t3, and t4 are classified into the cluster "1" and the node of t2 is classified into the cluster "0" is determined as a division candidate of the division pattern [1, 3] of the second cluster.

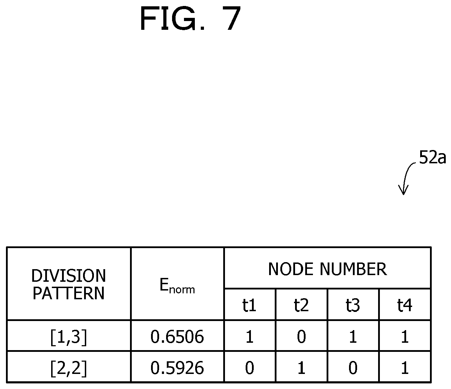

FIG. 7 is a diagram illustrating an example of the division candidate information of the second cluster generated from the extracted data of the division candidate information related to the nodes of the second cluster.

Division candidate information 52a of the second cluster includes the division candidate information of the division candidates of the two division patterns [1, 3] and [2, 2] described above. In the example of FIG. 7, values of $E_{norm}$ calculated by the solution process control unit 41 based on the division candidate information of the division candidates of the division patterns [1, 3] and [2, 2] are also included in the division candidate information 52a.

Such division candidate information 52a is stored in the division candidate storage unit 43. Note that, the number of nodes of the second cluster is n = 4, there are only the two division patterns described above. Thus, the Ising machine 22 does not solve a division candidate, and one of the two division candidates described above is selected to carry out the cluster division.

In the example of FIG. 7, the division candidate of the division pattern [2, 2] has the smallest value of $E_{norm}$, and thus this division candidate is selected. Then, the nodes of t1 and t3 and the nodes of t2 and t4 are divided.

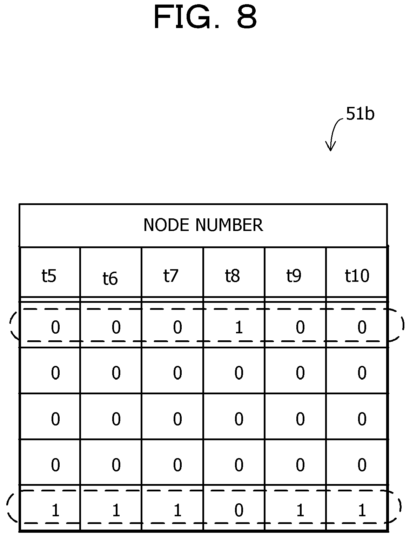

FIG. 8 is a diagram illustrating an example of extracted data of division candidate information related to the nodes of the third cluster.

Extracted data 51b of the division candidate information related to the nodes of the third cluster is obtained by extracting the division candidate information related to the nodes included in the third cluster from the division candidate information 50 illustrated in FIG. 5. The solution process control unit 41 generates division candidate information of the third cluster from the extracted data 51b.

As illustrated in FIG. 8, the division candidates of the division patterns in which all the nodes of t5 to t10 are classified into the cluster "0" (corresponding to the third cluster) are excluded from the division candidates of the third cluster. The division candidate information of such division candidates is not used as the division candidate information of the third cluster, and is not stored.

The division candidate of the division pattern in which the node of t8 is classified into the cluster "1" and the other nodes are classified into the cluster "0" is determined as a division candidate of the division pattern [1, 5] of the third cluster. Likewise, the division candidate of the division pattern in which the node of t8 is classified into the cluster "0" and the other nodes are classified into the cluster "1" is determined as a division candidate of the division pattern [1, 5].

FIG. 9 is a diagram illustrating an example of the division candidate information (storage target) of the third cluster generated from the extracted data of the division candidate information related to the nodes of the third cluster.

Division candidate information 52b of the third cluster includes the division candidate information of the division candidate of the one division pattern [1, 5] described above. In the example of FIG. 9, the value of $E_{norm}$ calculated by the solution process control unit 41 based on the division candidate information of the division candidate of the division pattern [1, 5] is also included in the division candidate information 52b.

Such division candidate information 52b is stored in the division candidate storage unit 43. Note that, since the number of nodes of the third cluster is n = 6, there are division patterns [2, 4] and [3, 3] in addition to the division pattern [1, 5] described above. Thus, the Ising machine 22 solves division candidates for the remaining two division patterns not stored in the division candidate storage unit 43.

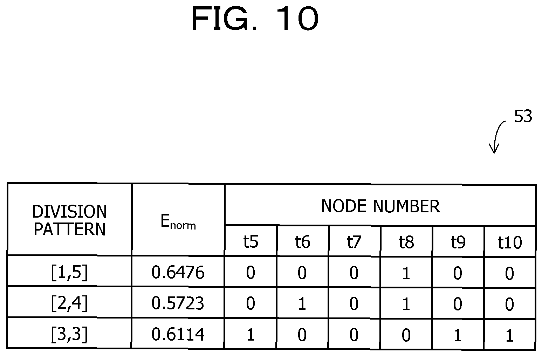

FIG. 10 is a diagram illustrating an example of the division candidate information of the third cluster. Division candidate information 53 of the third cluster illustrated in FIG. 10 also includes division candidate information of the division candidates of the division patterns [2, 4] and [3, 3] solved by the Ising machine 22. In the example of FIG. 10, values of $E_{norm}$ calculated by the solution process control unit 41 are also included in the division candidate information 53 for the division candidates of the division patterns [2, 4] and [3, 3].

One of the three division candidates in FIG. 10 is selected to carry out the cluster division.

In the example of FIG. 10, the division candidate of the division pattern [2, 4] has the smallest value of $E_{norm}$, and thus this division candidate is selected. Then, the nodes of t6 and t8 and the nodes of t5, t7, t9, and t10 are divided.

Hereinafter, of the two clusters after the division, a cluster including the nodes of t6 and t8 will be referred to as a fourth cluster, and a cluster including the nodes of t5, t7, t9, and t10 will be referred to as a fifth cluster.

Since the number of nodes of the fourth cluster is two, which does not satisfy $n \geq 3$, the fourth cluster is not selected in the processing of step S21. On the other hand, since the number of nodes of the fifth cluster is four, which satisfies $n \geq 3$, the fifth cluster is selected in the processing of step S21 to carry out further cluster division.

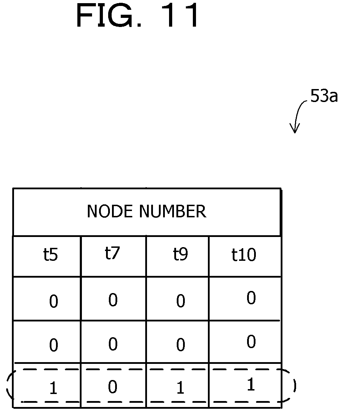

FIG. 11 is a diagram illustrating an example of extracted data of division candidate information related to the nodes of the fifth cluster.

Extracted data 53a of the division candidate information related to the nodes of the fifth cluster is obtained by extracting the division candidate information related to the nodes included in the fifth cluster from the division candidate information 53 illustrated in FIG. 10. The solution process control unit 41 generates division candidate information of the fifth cluster from the extracted data 53a.

As illustrated in FIG. 11, the division candidates of the division patterns in which all the nodes of t5, t7, t9, and t10 are classified into the cluster "0" are excluded from the division candidates of the fifth cluster. The division candidate information of such division candidates is not used as the division candidate information of the fifth cluster, and is not stored.

The division candidate of the division pattern in which the nodes of t5, t9, and t10 are classified into the cluster "1" and the node of t7 is classified into the cluster "0" is determined as a division candidate of the division pattern [1, 3] of the fifth cluster.

FIG. 12 is a diagram illustrating an example of the division candidate information (storage target) of the fifth cluster generated from the extracted data of the division candidate information related to the nodes of the fifth cluster.

Division candidate information 54 of the fifth cluster includes the division candidate information of the division candidate of the one division pattern [1, 3] described above. In the example of FIG. 12, the value of $E_{norm}$ calculated by the solution process control unit 41 based on the division candidate information of the division candidate of the division pattern [1, 3] is also included in the division candidate information 54.

Such division candidate information 54 is stored in the division candidate storage unit 43. Note that, since the number of nodes of the fifth cluster is n = 4, there is a division pattern [2, 2] in addition to the division pattern [1, 3] described above. Thus, the Ising machine 22 solves a division candidate for the division pattern [2, 2] not stored in the division candidate storage unit 43.

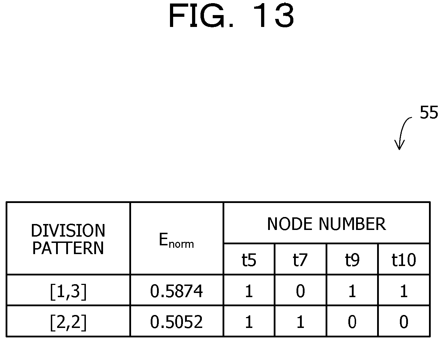

FIG. 13 is a diagram illustrating an example of the division candidate information of the fifth cluster. Division candidate information 55 of the fifth cluster illustrated in FIG. 13 also includes division candidate information of the division candidate of the division pattern [2, 2] solved by the Ising machine 22. In the example of FIG. 13, the value of $E_{norm}$ calculated by the solution process control unit 41 is also included in the division candidate information 55 for the division candidate of the division pattern [2, 2].

One of the two division candidates in FIG. 13 is selected to carry out the cluster division.

In the example of FIG. 13, the division candidate of the division pattern [2, 2] has the smallest value of $E_{norm}$, and thus this division candidate is selected. Then, the nodes of t5 and t7 and the nodes of t9 and t10 are divided.

Hereinafter, of the two clusters after the division, a cluster including the nodes of t5 and t7 will be referred to as a sixth cluster, and a cluster including the nodes of t9 and t10 will be referred to as a seventh cluster.

The number of nodes n is two both in the sixth cluster and the seventh cluster, which does not satisfy n ≥ 3. Since there is no other cluster satisfying n ≥ 3, the execution result is output (step S22), and the process is terminated.

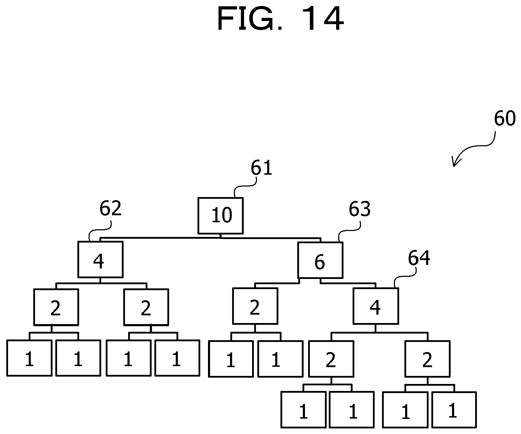

FIG. 14 is a diagram illustrating an exemplary phylogenetic tree based on the execution result of the hierarchical clustering for the first cluster illustrated in FIG. 5.

FIG. 14 illustrates an execution result 60 when the hierarchical clustering is performed on a first cluster 61 with the number of nodes n = 10 according to the process described above. Each block represents a cluster, and a number in the block represents the number of nodes of the cluster.

At the time of performing the hierarchical clustering according to the process described above, the number of times that the Ising machine 22 is caused to solve a division candidate is as follows.

At a time of division of the first cluster 61 of n = 10, the Ising machine 22 is caused to solve division candidates of the five division patterns illustrated in FIG. 5, and thus the number of times of solving is five.

At a time of division of a second cluster 62 of n = 4, the division candidates of the two division patterns illustrated in FIG. 7 are obtained from the division candidate information 50 at the time of the division of the first cluster 61. Thus, the number of times of solving by the Ising machine 22 is zero.

At a time of division of a third cluster 63 of n = 6, one of the division candidates of the three division patterns illustrated in FIG. 10 is obtained from the division candidate information 50 at the time of the division of the first cluster 61. Thus, the number of times of solving by the Ising machine 22 is two.

At a time of division of a fifth cluster 64 of n = 4, one of the division candidates of the two division patterns illustrated in FIG. 13 is obtained from the division candidate information 53 at the time of the division of the third cluster 63. Thus, the number of times of solving by the Ising machine 22 is one.

As described above, the number of times of solving by the Ising machine 22 is eight in total. The number of times of solving by the Ising machine 22 in a case of not using the division candidate information in the previous hierarchy is 12 since it is half of the total number of nodes of the respective clusters (first cluster 61, second cluster 62, third cluster 63, and fifth cluster 64) to be divided. Thus, in the data processing system 20 according to the second embodiment, the number of times of solving is reduced by four times. As a result, the execution time of the hierarchical clustering may be shortened.

Hereinafter, a comparative example of the execution time between a process not using the division candidate information in the previous hierarchy (hereinafter referred to as a comparative example process) and the above-described process in the data processing system 20 according to the second embodiment will be described. It is assumed that the comparative example process does not include the processing of steps S12 to S14 and S18 in FIG. 4.

For example, it is assumed that the execution time of common processing (reading of input data, etc.) of the comparative example process and the process by the data processing system 20 is $1.0 \times 10^3$ (ms). Note that the common processing indicates processing such as reading of input data, and the solution processing by the Ising machine 22 is excluded. A time taken for the solution processing by the Ising machine 22 is assumed to be 50 (ms) per solution processing. In addition, it is assumed that, in the data processing system 20, a time taken for steps S12 to S14 in FIG. 4 is 0.5 (ms), and a time taken for step S18 is 0.1 (ms). In the example illustrated in FIGs. 5 to 14, it is assumed that the processing of steps S12 to S14 is performed 7 times, and the processing of step S18 is performed 12 times.

In this case, the execution time of the comparative example process is $50 \times 12 + 1.0 \times 10^3 = 1.6 \times 10^3$ (ms) as the number of times of solving is 12.

On the other hand, the execution time of the data processing method by the data processing system 20 is $50 \times 8 + 0.1 \times 12 + 0.5 \times 7 + 1.0 \times 10^3 = 1.4 \times 10^3$ (ms) as the number of times of solving is 8.

As described above, the data processing method by the data processing system 20 achieves 12% reduction in the execution time as compared with the comparative example process.

(Application Examples)

The data processing method by the data processing system 20 may be used, for example, when cluster division is carried out based on similarity among a plurality of gene sequences to create a phylogenetic tree (e.g., see Reference Literature 1).

Reference Literature 1: ONODERA, Wataru, et al., "Phylogenetic tree reconstruction via graph cut presented using a quantum-inspired computer", Molecular Phylogenetics and Evolution, vol. 178, Jan. 2023

In this case, each gene sequence may be used as a node, and $d_{ij}$ in the equation (1) may be used as the similarity between gene sequences. Since the execution time of the hierarchical clustering may be shortened by using the data processing system 20 according to the second embodiment, the time taken for the creation of the phylogenetic tree with respect to a large number of gene sequences may be shortened.

Furthermore, the data processing method by the data processing system 20 may also be applied, for example, at a time of classifying topics for creating a thesaurus (thesaurus, dictionary, etc.) (e.g., see Reference Literature 2).

Reference Literature 2: KAJI, Hiroyuki, MORIMOTO, Yasutsugu, and AIZONO, Toshiko, "Extracting a Topic Hierarchy from a Text Corpus", Transactions of Information Processing Society of Japan, vol. 44, No. 2, pp. 405-420, Feb. 2003

In this case, each term may be used as a node, and $d_{ij}$ in the equation (1) may be used as relevance between terms. Since the execution time of the hierarchical clustering may be shortened by using the data processing system 20 according to the second embodiment, the time taken for the classification of the topics with respect to a large number of terms may be shortened.

Moreover, the data processing method by the data processing system 20 may also be applied, for example, at a time of performing phonological classification in voice recognition (e.g., see Reference Literature 3).

Reference Literature 3: MIYAGAKI, Ryoichi, and KAWABATA, Takeshi, "Clustering of Phone HMMs based on Top-down and Bottom-up Approaches", IPSJ SIG Technical Reports, vol. 2010-SLP-82 No. 12, pp. 1-6, Jul. 2010

In this case, each triphone (three consecutive phonemes) may be used as a node, and $d_{ij}$ in the equation (1) may be used as similarity between triphones. Since the execution time of the hierarchical clustering may be shortened by using the data processing system 20 according to the second embodiment, the time taken for the phonological classification with respect to a large number of triphones may be shortened.

While the examples of the three applications of the data processing method of the data processing system 20 according to the second embodiment have been briefly described above, applicable applications are not limited to the examples described above. The data processing method of the data processing system 20 according to the second embodiment may be applied to various applications that performs hierarchical clustering.

**Claims**

1. A data processing system (10) comprising:

   a device configured to implement an Ising machine (11, 22) that calculates respective first division candidates when a first cluster that includes a plurality of nodes is divided into a second cluster and a third cluster based on an Ising-type evaluation function that includes a weight value between the plurality of nodes of the first cluster; and
   an additional information processing device implemented as a computer (12, 21) configured to:

   obtain, from the Ising machine (11, 22), division candidate information that represents a plurality of the first division candidates for a plurality of individual first division patterns determined based on the number of nodes included in the first cluster;
   select one of the plurality of first division candidates for the plurality of individual first division patterns based on a value of the Ising-type evaluation function of the
   plurality of first division candidates and divide the first cluster into the second cluster and the third cluster;
   store the division candidate information of each of the respective first division candidates that has not been selected among the plurality of first division candidates in a storage unit;
determine whether or not any of the unselected first division candidates that correspond to a second division pattern of the second cluster exist based on the division candidate information stored in the storage unit; and when one of the unselected first division candidates that corresponds to the second division pattern is determined to exist, select one of second division candidates of the second cluster that includes the unselected first division candidate that corresponds to the second division pattern and divide the second cluster into a fourth cluster and a fifth cluster.

2. The data processing system (10) according to claim 1, wherein

the division candidate information of one of the unselected first division candidates includes second division candidate information to be used to divide the second cluster and third division candidate information to be used to divide the third cluster, and
the information processing device (12, 21) generates the second division candidate information based on information regarding a node included in the second cluster, and generates the third division candidate information based on information regarding a node included in the third cluster.

3. The data processing system (10) according to claim 2, wherein

the second division candidate information includes the second division pattern and a number of the node included in the second cluster, and
the third division candidate information includes a third division pattern of the third cluster and a number of the node included in the third cluster.

4. A program for causing a device configured to implement an Ising machine (11, 22) to calculate respective first division candidates when a first cluster that includes a plurality of nodes is divided into a second cluster and a third cluster based on an Ising-type evaluation function that includes a weight value between the plurality of nodes of the first cluster, and for causing an additional information processing device implemented as a computer to execute a process comprising:

obtaining, from the Ising machine (11, 22), division candidate information that represents a plurality of the first division candidates for a plurality of individual first division patterns determined based on the number of nodes included in the first cluster;
selecting one of the plurality of first division candidates for the plurality of individual first division patterns based on a value of the Ising-type evaluation function of the
plurality of first division candidates and dividing the first cluster into the second cluster and the third cluster;
storing the division candidate information of each of the respective first division candidates that has not been selected among the plurality of first division candidates in a memory;
determining whether or not any of the unselected first division candidates that correspond to a second division pattern of the second cluster exist based on the division candidate information stored in the memory; and
when one of the unselected first division candidates that corresponds to the second division pattern is determined to exist, selecting one of second division candidates of the second cluster that includes the unselected first division candidate that corresponds to the second division pattern and dividing the second cluster into a fourth cluster and a fifth cluster.

5. A data processing method comprising:

calculating, executed by a device configured to implement an Ising machine (11, 22), respective first division candidates when a first cluster that includes a plurality of nodes is divided into a second cluster and a third cluster based on an Ising-type evaluation function that includes a weight value between the plurality of nodes of the first cluster, and
executing, by an additional information processing device implemented as a computer, a process comprising:

obtaining, from the Ising machine, division candidate information that represents a plurality of the first division candidates for a plurality of individual first division patterns determined based on the number of nodes included in the first cluster;
selecting one of the plurality of first division candidates for the plurality of individual first division patterns based on a value of the Ising-type evaluation function of the

plurality of first division candidates and dividing the first cluster into the second cluster and the third cluster; storing the division candidate information of each of the respective first division candidates that has not been selected among the plurality of first division candidates in a memory;

determining whether or not any of the unselected first division candidates that correspond to a second division pattern of the second cluster exist based on the division candidate information stored in the memory; and

when one of the unselected first division candidates that corresponds to the second division pattern is determined to exist, selecting one of second division candidates of the second cluster that includes the unselected first division candidate that corresponds to the second division pattern and dividing the second cluster into a fourth cluster and a fifth cluster.

**Patentansprüche**

1. Datenverarbeitungssystem (10), umfassend:

eine Vorrichtung, die dazu ausgebildet ist, eine Ising-Maschine (11, 22) zu implementieren, die jeweilige erste Teilungskandidaten berechnet, wenn ein erstes Cluster, das eine Vielzahl von Knoten einschließt, auf der Grundlage einer Ising-Typ-Bewertungsfunktion, die einen Gewichtswert zwischen der Vielzahl von Knoten des ersten Clusters einschließt, in ein zweites Cluster und ein drittes Cluster geteilt wird; und

eine zusätzliche Informationsverarbeitungsvorrichtung, die als Computer (12, 21) implementiert ist und dazu ausgebildet ist:

von der Ising-Maschine (11, 22) Teilungskandidateninformation zu erhalten, die eine Vielzahl der ersten Teilungskandidaten für eine Vielzahl individueller erster Teilungsmuster darstellt, die auf der Grundlage der Anzahl von Knoten bestimmt werden, die in dem ersten Cluster eingeschlossen sind;

einen der Vielzahl von ersten Teilungskandidaten für die Vielzahl individueller erster Teilungsmuster auf der Grundlage eines Werts der Ising-Typ-Bewertungsfunktion der Vielzahl von ersten Teilungskandidaten auszuwählen und das erste Cluster in das zweite Cluster und das dritte Cluster zu teilen;

die Teilungskandidateninformation jedes der jeweiligen ersten Teilungskandidaten, der unter der Vielzahl von ersten Teilungskandidaten nicht ausgewählt worden ist, in einer Speichereinheit zu speichern;

auf der Grundlage der in der Speichereinheit gespeicherten Teilungskandidateninformation zu bestimmen, ob irgendeiner der nicht ausgewählten ersten Teilungskandidaten, der einem zweiten Teilungsmuster des zweiten Clusters entspricht, existiert oder nicht; und

wenn bestimmt wird, dass einer der nicht ausgewählten ersten Teilungskandidaten, der dem zweiten Teilungsmuster entspricht, existiert, einen der zweiten Teilungskandidaten des zweiten Clusters, der den nicht ausgewählten ersten Teilungskandidaten einschließt, der dem zweiten Teilungsmuster entspricht, auszuwählen und das zweite Cluster in ein viertes Cluster und ein fünftes Cluster zu teilen.

2. Datenverarbeitungssystem (10) nach Anspruch 1,

wobei die Teilungskandidateninformation eines der nicht ausgewählten ersten Teilungskandidaten zweite Teilungskandidateninformation, die zum Teilen des zweiten Clusters zu verwenden ist, und dritte Teilungskandidateninformation, die zum Teilen des dritten Clusters zu verwenden ist, einschließt, und

die Informationsverarbeitungsvorrichtung (12, 21) die zweite Teilungskandidateninformation auf der Grundlage von Informationen bezüglich eines in dem zweiten Cluster eingeschlossenen Knotens erzeugt und die dritte Teilungskandidateninformation auf der Grundlage von Informationen bezüglich eines in dem dritten Cluster eingeschlossenen Knotens erzeugt.

3. Datenverarbeitungssystem (10) nach Anspruch 2,

wobei die zweite Teilungskandidateninformation das zweite Teilungsmuster und eine Anzahl des in dem zweiten Cluster eingeschlossenen Knotens einschließt, und

die dritte Teilungskandidateninformation ein drittes Teilungsmuster des dritten Clusters und eine Anzahl des in dem dritten Cluster eingeschlossenen Knotens einschließt.

4. Programm zum Veranlassen einer Vorrichtung, die dazu ausgebildet ist, eine Ising-Maschine (11, 22) zu implementieren, jeweilige erste Teilungskandidaten zu berechnen, wenn ein erstes Cluster, das eine Vielzahl von Knoten einschließt, auf der Grundlage einer Ising-Typ-Bewertungsfunktion, die einen Gewichtswert zwischen der Vielzahl von Knoten des ersten Clusters einschließt, in ein zweites Cluster und ein drittes Cluster geteilt wird, und zum Veranlassen einer zusätzlichen Informationsverarbeitungsvorrichtung, die als Computer implementiert ist, einen Prozess auszuführen, der umfasst:

von der Ising-Maschine (11, 22) Teilungskandidateninformation zu erhalten, die eine Vielzahl der ersten Teilungskandidaten für eine Vielzahl individueller erster Teilungsmuster darstellt, die auf der Grundlage der Anzahl von Knoten bestimmt werden, die in dem ersten Cluster eingeschlossen sind;

einen der Vielzahl von ersten Teilungskandidaten für die Vielzahl individueller erster Teilungsmuster auf der Grundlage eines Werts der Ising-Typ-Bewertungsfunktion der Vielzahl von ersten Teilungskandidaten auszuwählen und das erste Cluster in das zweite Cluster und das dritte Cluster zu teilen;

die Teilungskandidateninformation jedes der jeweiligen ersten Teilungskandidaten, der unter der Vielzahl von ersten Teilungskandidaten nicht ausgewählt worden ist, in einem Speicher zu speichern;

auf der Grundlage der in dem Speicher gespeicherten Teilungskandidateninformation zu bestimmen, ob irgendeiner der nicht ausgewählten ersten Teilungskandidaten, der einem zweiten Teilungsmuster des zweiten Clusters entspricht, existiert oder nicht; und

wenn bestimmt wird, dass einer der nicht ausgewählten ersten Teilungskandidaten, der dem zweiten Teilungsmuster entspricht, existiert, einen der zweiten Teilungskandidaten des zweiten Clusters, der den nicht ausgewählten ersten Teilungskandidaten einschließt, der dem zweiten Teilungsmuster entspricht, auszuwählen und das zweite Cluster in ein viertes Cluster und ein fünftes Cluster zu teilen.

5. Datenverarbeitungsverfahren, umfassend:

Berechnen, ausgeführt durch eine Vorrichtung, die dazu ausgebildet ist, eine Ising-Maschine (11, 22) zu implementieren, von jeweiligen ersten Teilungskandidaten, wenn ein erstes Cluster, das eine Vielzahl von Knoten einschließt, auf der Grundlage einer Ising-Typ-Bewertungsfunktion, die einen Gewichtswert zwischen der Vielzahl von Knoten des ersten Clusters einschließt, in ein zweites Cluster und ein drittes Cluster geteilt wird, und

Ausführen, durch eine zusätzliche Informationsverarbeitungsvorrichtung, die als Computer implementiert ist, eines Prozesses, der umfasst:

von der Ising-Maschine Teilungskandidateninformation zu erhalten, die eine Vielzahl der ersten Teilungskandidaten für eine Vielzahl individueller erster Teilungsmuster darstellt, die auf der Grundlage der Anzahl von Knoten bestimmt werden, die in dem ersten Cluster eingeschlossen sind;

einen der Vielzahl von ersten Teilungskandidaten für die Vielzahl individueller erster Teilungsmuster auf der Grundlage eines Werts der Ising-Typ-Bewertungsfunktion der Vielzahl von ersten Teilungskandidaten auszuwählen und das erste Cluster in das zweite Cluster und das dritte Cluster zu teilen;

die Teilungskandidateninformation jedes der jeweiligen ersten Teilungskandidaten, der unter der Vielzahl von ersten Teilungskandidaten nicht ausgewählt worden ist, in einem Speicher zu speichern;

auf der Grundlage der in dem Speicher gespeicherten Teilungskandidateninformation zu bestimmen, ob irgendeiner der nicht ausgewählten ersten Teilungskandidaten, der einem zweiten Teilungsmuster des zweiten Clusters entspricht, existiert oder nicht; und

wenn bestimmt wird, dass einer der nicht ausgewählten ersten Teilungskandidaten, der dem zweiten Teilungsmuster entspricht, existiert, einen der zweiten Teilungskandidaten des zweiten Clusters, der den nicht ausgewählten ersten Teilungskandidaten einschließt, der dem zweiten Teilungsmuster entspricht, auszuwählen und das zweite Cluster in ein viertes Cluster und ein fünftes Cluster zu teilen.

## Revendications

1. Système (10) de traitement de données, comprenant :

un dispositif configuré pour mettre en œuvre une machine d'Ising (11, 22), qui calcule des candidats respectifs pour une première division lorsqu'une première grappe qui inclut une pluralité de nœuds est divisée en une deuxième grappe et une troisième grappe sur la base d'une fonction d'évaluation de type Ising qui inclut une valeur de pondération entre la pluralité de nœuds de la première grappe ; et

un dispositif supplémentaire de traitement d'informations, mis en œuvre sous la forme d'un ordinateur (12, 21) configuré pour :

obtenir, de la machine d'Ising (11, 22), des informations sur les candidats pour une division représentant une pluralité des candidats pour une première division pour une pluralité de schémas individuels de première division déterminés sur la base du nombre de nœuds inclut dans la première grappe ;

sélectionner un candidat parmi la pluralité de candidats pour une première division pour la pluralité des schémas individuels de première division sur la base d'une valeur de la fonction d'évaluation de type Ising de la pluralité de candidats pour une première division, et diviser la première grappe en la deuxième grappe et la troisième grappe ;

stocker dans une unité de stockage les informations sur le candidat pour une division de chacun des candidats respectifs pour une première division qui n'a pas été sélectionné parmi la pluralité des candidats pour une première division ;

déterminer, sur la base des informations sur le candidat pour une division stockées dans l'unité de stockage, si un candidat quelconque parmi les candidats pour une première division non sélectionnés qui correspondent à un schéma de deuxième division de la deuxième grappe existe ou non ; et

lorsqu'il est déterminé qu'existe un des candidats pour une première division non sélectionnés qui correspond au schéma de deuxième division, sélectionner un candidat parmi les candidats pour une deuxième division de la deuxième grappe qui inclut le candidat pour une première division non sélectionné qui correspond au schéma de deuxième division, et diviser la deuxième grappe en une quatrième grappe et une cinquième grappe.

2. Système (10) de traitement de données selon la revendication 1, dans lequel

les informations sur le candidat pour une division d'un candidat parmi les candidats pour une première division non sélectionnés incluent des informations sur le candidat pour une deuxième division devant être utilisées pour diviser la deuxième grappe et des informations sur le candidat pour une troisième division devant être utilisées pour diviser la troisième grappe, et

le dispositif (12, 21) de traitement d'informations génère les informations sur le candidat pour une deuxième division sur la base d'informations concernant un nœud inclus dans la deuxième grappe, et génère les informations sur le candidat pour une troisième division sur la base d'informations concernant un nœud inclus dans la troisième grappe.

3. Système (10) de traitement de données selon la revendication 2, dans lequel

les informations sur le candidat pour une deuxième division incluent le schéma de deuxième division et un nombre du nœud inclus dans la deuxième grappe, et

les informations sur le candidat pour une troisième division incluent un schéma de troisième division de la troisième grappe et un nombre du nœud inclus dans la troisième grappe.

4. Programme pour amener un dispositif configuré pour mettre en œuvre une machine d'Ising (11, 22) à calculer des candidats respectifs pour une première division lorsqu'une première grappe qui inclut une pluralité de nœuds est divisée en une deuxième grappe et une troisième grappe sur la base d'une fonction d'évaluation de type Ising qui inclut une valeur de pondération entre la pluralité de nœuds de la première grappe, et pour amener un dispositif supplémentaire de traitement d'informations mis en œuvre sous la forme d'un ordinateur à exécuter un procédé comprenant :

le fait d'obtenir, de la machine d'Ising (11, 22), des informations sur les candidats pour une division représentant une pluralité de candidats pour une première division pour une pluralité de schémas individuels de première division déterminés sur la base du nombre de nœuds inclus dans la première grappe ;

le fait de sélectionner, sur la base d'une valeur de la fonction d'évaluation de type Ising de la pluralité des candidats pour une première division, un candidat parmi la pluralité de candidats pour une première division pour la pluralité des schémas individuels de première division, et de diviser la première grappe en la deuxième grappe et la troisième grappe ;

le fait de stocker dans une mémoire les informations sur le candidat pour une division de chaque candidat parmi les candidats respectifs pour une première division qui n'a pas été sélectionné parmi la pluralité de candidats pour une première division ;

le fait de déterminer, sur la base des informations sur le candidat pour une division stockées dans la mémoire, si un candidat quelconque parmi les candidats pour une première division non sélectionnés qui correspondent à un schéma de deuxième division de la deuxième grappe existe ou non ; et

lorsqu'il est déterminé qu'un candidat parmi les candidats pour une première division non sélectionnés qui correspond au schéma de deuxième division existe, le fait de sélectionner un candidat parmi des candidats pour une deuxième division de la deuxième grappe qui inclut le candidat pour une première division non sélectionné qui correspond au schéma de deuxième division, et de diviser la deuxième grappe en une quatrième grappe et une cinquième grappe.

5. Procédé de traitement de données comprenant :

le fait de calculer, exécuté par un dispositif configuré pour mettre en œuvre une machine d'Ising (11, 22), des candidats respectifs pour une première division lorsqu'une première grappe qui inclut une pluralité de nœuds est divisée en une deuxième grappe et une troisième grappe sur la base d'une fonction d'évaluation de type Ising qui inclut une valeur de pondération entre la pluralité de nœuds de la première grappe, et

le fait, par un dispositif supplémentaire de traitement d'informations mis en œuvre sous la forme d'un ordinateur, de mettre en œuvre un procédé comprenant :

le fait d'obtenir, de la machine d'Ising, des informations sur des candidats pour une division représentant une pluralité des candidats pour une première division pour une pluralité de schémas individuels de première division déterminés sur la base du nombre de nœuds inclus dans la première grappe ;

le fait de sélectionner, sur la base d'une valeur de la fonction d'évaluation de type Ising de la pluralité de candidats pour une première division, un candidat parmi la pluralité de candidats pour une première division pour la pluralité de schémas individuels de première division, et de diviser la première grappe en la deuxième grappe et la troisième grappe ;

le fait de stocker dans une mémoire les informations sur le candidat pour une division de chacun des candidats respectifs pour une première division qui n'a pas été sélectionné parmi la pluralité des candidats pour une première division ;

le fait de déterminer, sur la base des informations sur le candidat pour une division stockées dans la mémoire, si un candidat quelconque parmi les candidats pour une première division non sélectionnés qui correspondent à un schéma de deuxième division de la deuxième grappe existe ou non ; et,

lorsqu'il est déterminé qu'un candidat parmi les candidats pour une première division non sélectionnés qui correspond au schéma de deuxième division existe, le fait de sélectionner un candidat parmi des candidats pour une deuxième division de la deuxième grappe qui inclut le candidat pour une première division non sélectionné qui correspond au schéma de deuxième division, et de diviser la deuxième grappe en une quatrième grappe et une cinquième grappe.

# FIG. 1

DIVISION OF FIRST CLUSTER (SOLVE DIVISION CANDIDATE WITH ISING MACHINE)

DIVISION CANDIDATE OF DIVISION PATTERN [1, 6]

DIVISION CANDIDATE OF DIVISION PATTERN [2, 5]

DIVISION CANDIDATE OF DIVISION PATTERN [3, 4]

SELECT DIVISION CANDIDATE OF DIVISION PATTERN [3, 4] AND MAKE DIVISION

STORAGE UNIT 12a1 12a

SECOND CLUSTER

THIRD CLUSTER

[1,6] A B C D E F G
1 0 0 0 0 0 0

[2,5] A B C D E F G
0 0 0 1 1 0 0

12a2

NO NEED FOR SOLVING WITH ISING MACHINE

FOURTH CLUSTER

FIFTH CLUSTER

DIVISION CANDIDATE OF DIVISION PATTERN [1, 2]

10

INFORMATION PROCESSING DEVICE 12

ISING MACHINE 11

$n, d_{ij}, c$

PROCESSING UNIT 12b

STORAGE UNIT 12a

$x_i$

# FIG. 2

20

21

INFORMATION PROCESSING DEVICE

| 31 | | 34 |
| CPU | | GPU |

34a

| 32 | | 35 |
| RAM | | INPUT INTERFACE |

35a

| 33 | | 36 |
| HDD | | MEDIUM READER |

36a

37
COMMUNICATION INTERFACE

37a
NETWORK

22
ISING MACHINE

BUS

# FIG. 3

# FIG. 4

START

RECEIVE INPUT — S10

CREATE n/2 PIECES OF c BASED ON n — S11

S12
HAS CORRESPONDING DIVISION CANDIDATE BEEN STORED? — YES

S13
HAVE ALL CORRESPONDING DIVISION CANDIDATES BEEN STORED? — YES

NO

NO

S14
CAUSE ISING MACHINE TO SOLVE DIVISION CANDIDATE FOR DIVISION PATTERN HAVING NOT BEEN STORED

S15
CAUSE ISING MACHINE TO SOLVE DIVISION CANDIDATE FOR n/2 DIVISION PATTERNS

CALCULATE $E_{norm}$ VALUE OF n/2 DIVISION CANDIDATES — S16

SELECT DIVISION CANDIDATE WITH SMALLEST $E_{norm}$ VALUE TO PERFORM CLUSTER DIVISION — S17

STORE UNSELECTED DIVISION CANDIDATE INFORMATION — S18

UPDATE NODE INFORMATION — S19

S20
IS THERE CLUSTER SATISFYING n ≥ 3? — YES

NO

S22
OUTPUT EXECUTION RESULT

S21
SELECT ONE CLUSTER SATISFYING n ≥ 3

END

# FIG. 5

50

| DIVISION PATTERN | $E_{norm}$ | NODE NUMBER | | | | | | | | | |
|---|---|---|---|---|---|---|---|---|---|---|---|
| | | t1 | t2 | t3 | t4 | t5 | t6 | t7 | t8 | t9 | t10 |
| [1,9] | 0.6832 | 0 | 0 | 0 | 0 | 0 | 0 | 0 | 1 | 0 | 0 |
| [2,8] | 0.5899 | 0 | 1 | 0 | 1 | 0 | 0 | 0 | 0 | 0 | 0 |
| [3,7] | 0.5262 | 1 | 0 | 1 | 1 | 0 | 0 | 0 | 0 | 0 | 0 |
| [4,6] | 0.4206 | 1 | 1 | 1 | 1 | 0 | 0 | 0 | 0 | 0 | 0 |
| [5,5] | 0.5151 | 0 | 0 | 0 | 0 | 1 | 1 | 1 | 0 | 1 | 1 |

# FIG. 6

51a

| NODE NUMBER | | | |
|:---:|:---:|:---:|:---:|
| t1 | t2 | t3 | t4 |
| 0 | 0 | 0 | 0 |
| 0 | 1 | 0 | 1 |
| 1 | 0 | 1 | 1 |
| 1 | 1 | 1 | 1 |
| 0 | 0 | 0 | 0 |

# FIG. 7

52a

| DIVISION PATTERN | $E_{norm}$ | NODE NUMBER | | | |
|---|---|---|---|---|---|
| | | t1 | t2 | t3 | t4 |
| [1,3] | 0.6506 | 1 | 0 | 1 | 1 |
| [2,2] | 0.5926 | 0 | 1 | 0 | 1 |

# FIG. 8

51b

| NODE NUMBER | | | | | |
|-------------|-------|-------|-------|-------|-------|
| t5 | t6 | t7 | t8 | t9 | t10 |
| 0 | 0 | 0 | 1 | 0 | 0 |
| 0 | 0 | 0 | 0 | 0 | 0 |
| 0 | 0 | 0 | 0 | 0 | 0 |
| 0 | 0 | 0 | 0 | 0 | 0 |
| 1 | 1 | 1 | 0 | 1 | 1 |

# FIG. 9

52b

| DIVISION PATTERN | $E_{norm}$ | NODE NUMBER | | | | | |
|---|---|---|---|---|---|---|---|
| | | t5 | t6 | t7 | t8 | t9 | t10 |
| [1,5] | 0.6476 | 0 | 0 | 0 | 1 | 0 | 0 |

# FIG. 10

53

| DIVISION PATTERN | $E_{norm}$ | NODE NUMBER | | | | | |
|---|---|---|---|---|---|---|---|
| | | t5 | t6 | t7 | t8 | t9 | t10 |
| [1,5] | 0.6476 | 0 | 0 | 0 | 1 | 0 | 0 |
| [2,4] | 0.5723 | 0 | 1 | 0 | 1 | 0 | 0 |
| [3,3] | 0.6114 | 1 | 0 | 0 | 0 | 1 | 1 |

# FIG. 11

53a

| NODE NUMBER | | | |
|---|---|---|---|
| t5 | t7 | t9 | t10 |
| 0 | 0 | 0 | 0 |
| 0 | 0 | 0 | 0 |
| 1 | 0 | 1 | 1 |

# FIG. 12

54

| DIVISION PATTERN | $E_{norm}$ | NODE NUMBER | | | |
|---|---|---|---|---|---|
| | | t5 | t7 | t9 | t10 |
| [1,3] | 0.5874 | 1 | 0 | 1 | 1 |

# FIG. 13

55

| DIVISION PATTERN | $E_{norm}$ | NODE NUMBER | | | |
|---|---|---|---|---|---|
| | | t5 | t7 | t9 | t10 |
| [1,3] | 0.5874 | 1 | 0 | 1 | 1 |
| [2,2] | 0.5052 | 1 | 1 | 0 | 0 |

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019046023 A

- WO 2020255634 A

**Non-patent literature cited in the description**

- **KALEHBASTI POUYA REZAZADEH**. *Ising-Based Louvain Method: Clustering Large Graphs with Specialized Hardware*, 06 December 2020
- **ONODERA, WATARU et al.** Phylogenetic tree reconstruction via graph cut presented using a quantum-inspired computer. *Molecular Phylogenetics and Evolution*, January 2023, vol. 178

- **KAJI, HIROYUKI** ; **MORIMOTO, YASUTSUGU** ; **AIZONO, TOSHIKO**. Extracting a Topic Hierarchy from a Text Corpus. *Transactions of Information Processing Society of Japan*, February 2003, vol. 44 (2), 405-420
- **MIYAGAKI, RYOICHI** ; **KAWABATA, TAKESHI**. Clustering of Phone HMMs based on Top-down and Bottom-up Approaches. *IPSJ SIG Technical Reports*, July 2010, vol. 2010-SLP-82 (12), 1-6